# FASCICULE DE BREVET EUROPEEN

(11) **EP 2 369 219 B1**
(45) Date de publication et mention de la délivrance du brevet: **28.08.2013**
(21) Numéro de dépôt: 11159894.2
(22) Date de dépôt: 25.03.2011
(51) Int. Cl.: F16M 11/04

(54) **Dispositif de fixation pour ecran plat**
Befestigungsvorrichtung für Flachbildschirm
Attachment device for a flat screen

(30) Priorité: 26.03.2010 FR 1052240; 26.03.2010 FR 1052241
(43) Date de publication de la demande: 28.09.2011
(73) Titulaire: Erard, 38230 Chavanoz (FR)
(72) Inventeur: Verriere, Eric, 69004, LYON (FR); Perrinet, Jean-François, 01150, LAGNIEU (FR); Bonnemere, Patrick, 69004, LYON (FR)
(74) Mandataire: Thivillier, Patrick

(56) Documents cités:
- EP-A1- 1 703 195
- DE-U1-202005 009 471
- US-A1- 2003 160 138
- US-A1- 2007 097 619
- US-A1- 2008 192 418
- US-B1- 6 371 424

## Description

### DOMAINE DE L'INVENTION

La présente invention concerne un dispositif de fixation pour écran plat du type plasma ou LCD sur un support tel qu'un mur. Ce dispositif de fixation est particulièrement destiné aux écrans extra-plats dits slims permettant de fixer l'écran sur un mur avec un espace minimal entre la face arrière de l'écran et le support.

### ARRIERE PLAN DE L'INVENTION

Il est bien connu que, au cours de ces dernières années, les écrans plats ont largement supplanté les écrans cathodiques particulièrement encombrants. Ces écrans plats, tels que les écrans plasmas, LCD ou similaire, de télévision ou d'ordinateur notamment présentent un faible encombrement et peuvent ainsi être fixés directement sur un support vertical tel qu'un mur ou sur une colonne verticale d'un mobilier adapté au multimédia.

A cet effet, on connaît déjà de nombreux moyens de fixation de ce type d'écran sur un mur. Ces moyens de fixation sont usuellement constitués d'un cadre ou d'une platine support apte à être fixé sur la face arrière de l'écran plat et comportant des crochets coopérant avec une barre de fixation horizontale préalablement fixée au mur. Certains de ces moyens de fixation comportent des moyens de réglage en hauteur de l'écran.

C'est le cas notamment de la demande de brevet français FR 2 872 873 qui décrit un dispositif de fixation d'un écran plat sur un support comportant un profilé en C horizontal se fixant contre un mur ou une colonne support et deux profilés en C verticaux se fixant à l'arrière de l'écran plat. Chaque extrémité supérieure des profilés verticaux comporte une série d'encoches formant crochet, permettant l'encastrement dans le profilé en C horizontal. Le profilé horizontal comporte à chacune de ses extrémités un ergot formant butée transversale empêchant les deux profilés verticaux fixés sur la face arrière de l'écran de translater au-delà d'une valeur limite.

Désormais, les principaux fabricants d'écrans plats commercialisent des écrans plats dits " slims " dont l'épaisseur est inférieure à 7 cm seulement. Les dispositifs de fixation de l'art antérieur procurent un déport par rapport au support bien supérieur à l'épaisseur de ces écrans " slims" rendant la pose d'un écran plat " slim " sur un mur particulièrement inesthétique.

On connait également des systèmes de connexion rapide pour écran d'ordinateur notamment. C'est le cas, par exemple, de la demande de brevet américain US 2007/097619 par exemple, qui décrit un dispositif de fixation selon le préambule de la revendication 1. Cette demande de brevet décrit un système de connexion rapide pour un dispositif électronique comprenant une station d'accueil configurée pour recevoir un dispositif électronique, la station d'accueil ayant un mécanisme de verrouillage actionnable dans une position déverrouillée, le mécanisme de verrouillage étant configuré pour rester indépendamment dans la position déverrouillée et pour revenir automatiquement dans une position verrouillée lors du désengagement du dispositif électronique de la station d'accueil. Le système est constitué d'une platine apte à être solidarisée sur un support, ledit support comportant des moyens de solidarisation complémentaires coopérant avec des moyens de solidarisation de la platine, et des moyens aptes à assurer successivement le blocage du cintre support sur la platine de fixation et la libération dudit support par rapport à la platine et inversement.

Ce type de dispositif est inadapté pour des écrans de télévision de grandes dimensions qui sont relativement lourds.

On connait également la demande de brevet américain US 2008/192418 qui décrit un système de montage d'un dispositif d'affichage à écran plat. Ledit système comprend une plaque de paroi destinée à être fixée à une paroi et une plaque de moniteur pouvant être montée sur la plaque de paroi. Des plaques d'extension peuvent être fixées à des emplacements choisis sur la plaque du moniteur pour recevoir le montage de diverses dimensions d'écrans d'affichage telles que des télévisions à écran plat. Les bords latéraux de la plaque de paroi et de la plaque de moniteur comportent des ailes repliées pour former des glissières.

Par ailleurs, les dispositifs de fixation de l'art antérieur présentent l'inconvénient de ne pas procurer une sécurité optimale. En effet, ces dispositifs de fixation n'assurent pas le maintien de l'écran en cas de choc vertical sur la partie inférieure de l'écran risquant ainsi de tomber sur un enfant par exemple.

### BREVE DESCRIPTION DE L'INVENTION

L'un des buts de l'invention est donc de remédier à ces inconvénients en proposant un dispositif de fixation pour écran plat de type LCD, plasma ou similaire, plus particulièrement destiné aux écrans plats dits " slims ", de conception simple, peu onéreuse, facile de pose et procurant une sécurité optimale lors de la mise en place et/ou du retrait de l'écran.

A cet effet et conformément à l'invention, il est proposé un dispositif de fixation pour écran plat du type plasma, LCD ou similaire sur un support, constitué d'une platine dite de fixation et d'un cintre support (3), ladite platine de fixation étant apte à être solidarisée sur un support et comportant sur sa face avant des moyens de solidarisation d'un cintre support destiné à être fixé sur la face arrière d'un écran plat, ledit cintre support comportant des moyens de solidarisation complémentaires coopérant avec des moyens de solidarisation de la platine supported fixation, et des moyens aptes à assurer successivement le blocage du cintre support sur la platine de fixation et la libération dudit cintre support par rapport à la platine de fixation et inversement ; ledit dispositif est remarquable en ce qu'il comporte un cliquet positionné entre la face avant de la platine de fixation et les moyens de solidarisation de la platine de fixation, pivotant autour d'un axe de rotation solidaire de la face avant de ladite platine de fixation et muni à une première extrémité d'un crochet apte à coopérer avec une encoche du cintre support et à une autre extrémité d'un bras curviligne à déformation élastique s'étendant perpendiculairement au crochet et apte à prendre appui sur le bord inférieur du cintre support lorsque le crochet est retiré de l'encoche, l'extrémité libre inférieure du cintre support formant une butée d'arrêt qui empêche le retour du crochet dans sa position initiale dans l'encoche (6) afin de permettre le retrait du cintre support des moyens de solidarisation de la platine support.

L'extrémité libre du crochet comporte un chemin de came sur lequel est apte à prendre appui le bord inférieur du cintre support lors du coulissement du cintre dans les moyens de solidarisation de la platine de fixation afin de procurer la rotation du crochet autour de son axe jusqu'à ce que le crochet s'étende au droit de l'encoche.

Par ailleurs, le dispositif comporte un moyen de rappel dont les extrémités sont respectivement solidaires de la platine de fixation et de la base du bras curviligne afin de ramener le crochet dans l'encoche.

De plus, il comporte un cordon de commande solidaire de la base du bras curviligne afin de permettre le retrait du crochet de l'encoche lorsqu'une traction sur le cordon est exercée.

L'autre extrémité du cordon est solidaire d'un dévidoir.
Ledit cintre support est constitué de deux branches s'étendant de part et d'autre d'une base hémi-annulaire comportant dans sa partie inférieure au moins une fente s'étendant sensiblement perpendiculairement auxdites branches, lesdites branches étant diamétralement opposées.

Au moins l'un des bords de la fente du cintre support comporte une encoche, ladite encoche étant positionnée à proximité de l'extrémité libre de la fente.

Chaque branche du cintre comporte des trous répartis le long de chaque branche à intervalles réguliers pour le passage de vis fixation de l'écran.

Il comporte au moins une pièce, solidaire de la face avant de la platine de fixation, formant une glissière pour les bords de la fente du cintre support.

Ladite pièce consiste en une pièce métallique sensiblement ovoïde, comportant deux bords rectilignes opposés et deux bords circulaires opposés, embossé pour former une collerette périphérique qui définit avec la face avant une glissière dans laquelle les bords de la fente du cintre support sont aptes à coulisser.

De manière particulièrement avantageuse, la platine de fixation comporte d'une part au moins deux jours circulaires aptes à recevoir respectivement une rondelle circulaire montée libre en rotation dans lesdits jours, chaque rondelle comportant au moins une fente radiale pour le passage des vis de fixation et chaque jour circulaire étant embossé suivant un diamètre légèrement supérieur au diamètre du jour afin de former en creux un épaulement circulaire pour recevoir les rondelles excentriques présentant un diamètre tout juste inférieur au diamètre de l'épaulement circulaire, chaque rondelle excentrique étant embossée en creux dans sa partie centrale pour former à sa périphérie une collerette circulaire apte à prendre appui sur l'épaulement circulaire des jours, et d'autre part des capots obturateurs circulaires aptes à coiffer les jours et les rondelles excentriques obtenus dans une matière plastique et maintenus en place par déformation élastique en prenant appui sur l'épaulement circulaire et sur le bord périphérique de la collerette circulaire de la rondelle excentrique.

Par ailleurs, ladite platine de fixation comporte un niveau à bulle permettant de s'assurer de la bonne horizontalité de la platine de fixation lors de sa fixation sur le support.

De préférence, la platine de fixation consiste en une plaque métallique rectangulaire comportant quatre jours circulaires pratiqués aux quatre angles de ladite platine de fixation.

Les angles de la platine de fixation sont arrondis afin d'éviter toute blessure lors de sa manipulation.

Chaque rondelle excentrique comporte une fente radiale s'étendant sensiblement depuis le centre jusqu'à la collerette.

### BREVE DESCRIPTION DES DESSINS

D'autres avantages et caractéristiques ressortiront mieux de la description qui va suivre d'une variante d'exécution, donnée à titre d'exemple non limitatif, du dispositif de fixation pour écran plat conforme à l'invention, en référence aux dessins annexés, sur lesquels :
la figure 1 est une vue en perspective éclatée du dispositif de fixation pour écran plat conforme à l'invention,
la figure 2 est une vue en coupe éclatée de la platine de fixation du dispositif conforme à l'invention,
la figure 3 est une vue en coupe d'un détail de la platine de fixation du dispositif de fixation conforme à l'invention,
la figure 4 est une vue en perspective du cliquet formant les moyens de solidarisation du cintre support sur la platine de fixation du dispositif suivant l'invention,
la figure 5 est une vue de dessus de la platine de fixation et de la pièce formant glissière dans laquelle est inséré le cintre support du dispositif conforme à l'invention,
les figures 6A à 6D sont des vues de face des différentes étapes de l'accrochage du cintre support sur la platine de fixation du dispositif conforme à l'invention.

### DESCRIPTION DETAILLEE DE L'INVENTION

On décrira ci-après, à titre d'exemple non limitatif, un dispositif de fixation d'un écran plat dit "slim " sur un mur ; toutefois, il est bien évident que le dispositif de fixation pourra être utilisé pour la fixation de tout type d'écran plat sur tout type de support vertical ou incliné sans pour autant sortir du cadre de l'invention.

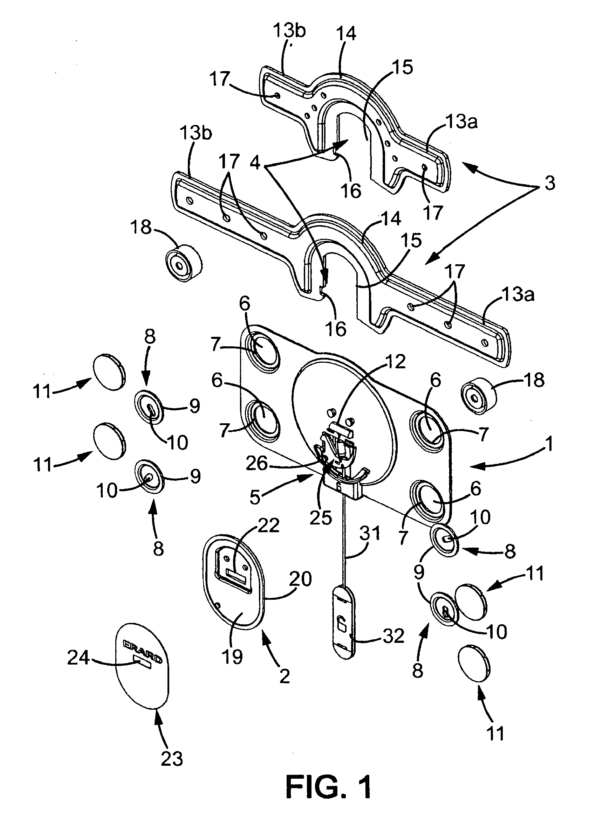

En référence à la figure 1, le dispositif de fixation pour écran plat du type plasma, LCD ou similaire suivant l'invention est constitué d'une platine de fixation 1 apte à être solidarisée sur un support, tel qu'un mur par exemple, et comportant sur sa face avant des moyens de solidarisation 2 d'un cintre support 3 destiné à être fixé sur la face arrière d'un écran plat, non représenté sur la figure 1, ledit cintre support 3 comportant des moyens de solidarisation complémentaires 4 coopérant avec les moyens de solidarisation 2 de la platine support 1, et des moyens 5 aptes à assurer successivement le blocage du cintre support 3 sur la platine de fixation 1 et la libération dudit cintre support 3 par rapport à la platine de fixation 1 et inversement.

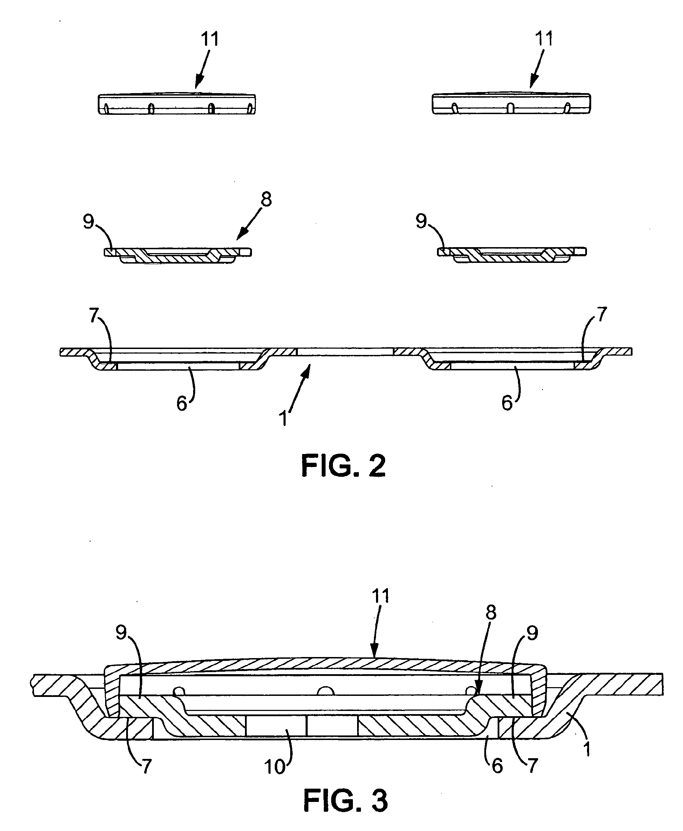

En référence aux figures 1 à 3, la platine de fixation 1 consiste en une plaque métallique rectangulaire dont les angles sont arrondis afin d'éviter toute blessure lors de sa manipulation. La platine de fixation 1 comporte, par ailleurs, quatre jours circulaires 6 pratiqués aux quatre angles de la platine 1, chaque jour circulaire 6 étant embossé suivant un diamètre légèrement supérieur au diamètre du jour 6 afin de former en creux un épaulement circulaire 7. La platine de fixation comporte également des rondelles excentriques 8 de diamètre tout juste inférieur au diamètre de l'épaulement circulaire 7, chaque rondelle excentrique étant embossée en creux dans sa partie centrale pour former à la périphérie une collerette circulaire 9 apte à prendre appui sur l'épaulement circulaire 7 des jours 6.

Par ailleurs, chaque rondelle excentrique 8 comporte une fente radiale 10 s'étendant sensiblement depuis le centre jusqu'à la collerette 9, ladite fente permettant le passage d'une vis de fixation non représentée sur les figures.

Il va de soi que chaque rondelle excentrique 8 pourra comprendre plusieurs fentes radiales 10.

Accessoirement, la platine de fixation 1 comporte des capots obturateurs 11 circulaires venant coiffer les jours 6 et les rondelles excentriques 8. Lesdits capots obturateurs sont obtenus dans une matière plastique et sont maintenus en place par déformation élastique en prenant appui sur l'épaulement circulaire 7 et sur le bord périphérique de la collerette circulaire 9 de la rondelle excentrique 8.

Il est bien évident que la platine de fixation 1 pourra présenter une forme quelconque et/ou être substituée par un cadre rectangulaire sans pour autant sortir du cadre de l'invention.

Accessoirement, la platine de fixation 1 comporte dans sa partie centrale un niveau à bulle 12 permettant de s'assurer de l'horizontalité lors de la fixation de la platine 1 sur le mur, un défaut d'horizontalité de la platine 1 entraînant ultérieurement un défaut d'horizontalité de l'écran.

Ainsi, pour la fixation de la platine sur un mur, un utilisateur perce quatre trous dans le mur au moyen d'un gabarit, par exemple, non représenté sur les figures, et d'une perceuse, puis, après avoir introduit des chevilles appropriées dans lesdits trous, il place la platine 1 munie des rondelles excentriques 8 de telle manière que les jours circulaires 6 soient sensiblement au droit desdits trous. L'utilisateur fait ensuite tourner les rondelles excentriques 8 jusqu'à ce que, d'une part, les fentes 10 soient toutes au droit des trous et, d'autre part, que le niveau à bulle indique une parfaite horizontalité. L'utilisateur peut alors visser les vis à travers les fentes 10, puis il place les capots obturateurs 11 sur les rondelles excentriques 8 afin de les cacher.

Par ailleurs, en référence à la figure 1, le cintre support 3 est constitué de deux branches 13a,13b s'étendant de part et d'autre d'une base hémi-annulaire 14 comportant dans sa partie inférieure une fente 15 s'étendant sensiblement perpendiculairement auxdites branches 13a,13b et débouchant dans la partie inférieure du cintre 3, lesdites branches 13a,13b étant diamétralement opposées. On notera que, sur la figure 1, nous avons représenté deux tailles de cintre support 3, un cintre support 3 pour des écrans de petite taille et un cintre support pour écran de taille moyenne.

Il va de soi que le dispositif pourra comporter d'autres tailles de cintre 3 en fonction des dimensions de l'écran à fixer.

L'un des bords de la fente 15 du cintre support 3 comporte une encoche 16, ladite encoche 16 étant positionnée à proximité de l'extrémité inférieure de la fente 15. Par ailleurs, chaque branche 13a,13b du cintre 3 comporte des trous 17 répartis le long de chaque branche 13a,13b à intervalles réguliers pour le passage de vis fixation de l'écran. De plus, le dispositif comporte des entretoises 18 destinées à être positionnées entre la face arrière de l'écran plat et les branches 13a,13b du cintre support 3. Accessoirement, le dispositif comporte des butées cylindriques, non représentées sur la figure 1, destinées à être solidarisées sur la face arrière de l'écran plat dans sa partie inférieure, ces butées prenant appui sur le mur afin d'une part d'assurer la verticalité de l'écran et d'autre part d'éviter un porte à faux susceptible d'endommager le dispositif de fixation.

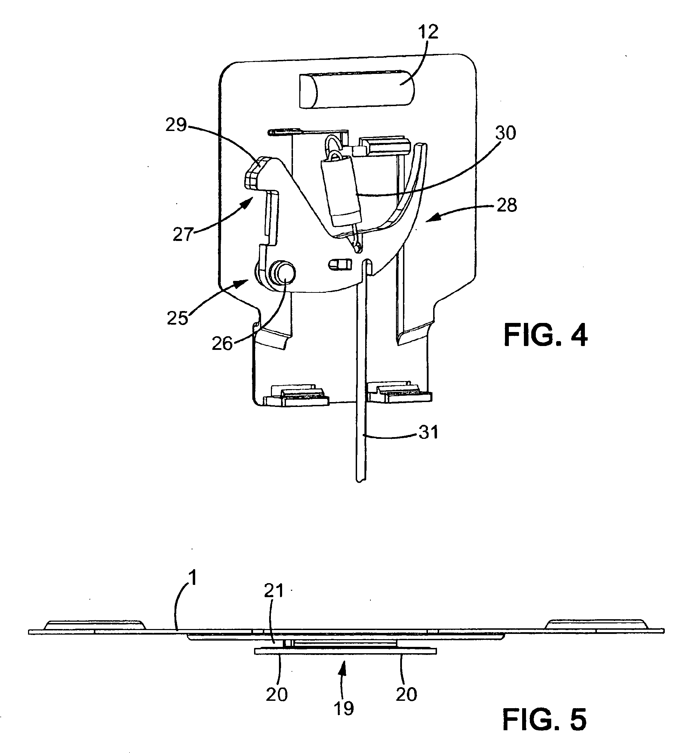

En référence aux figures 1 et 5, le dispositif comporte par ailleurs une pièce 19, solidaire de la face avant de la platine de fixation 1, formant une glissière pour les bords de la fente 15 du cintre support 3. Ladite pièce 19 consiste en une pièce métallique sensiblement ovoïde, comportant deux bords rectilignes opposés et deux bords circulaires opposés, embossée pour former une collerette périphérique 20 qui définit avec la face avant de la platine de fixation 1 une glissière 21 dans laquelle les bords de la fente 15 du cintre support 3 sont aptes à coulisser. Ladite pièce comporte un évidement 22 permettant le passage du niveau à bulle 12 et, accessoirement, en référence à la figure 1, ladite pièce 19 formant glissière est coiffée par un capot 23 également muni d'un évidement 24 pour le passage du niveau à bulle 12.

En référence aux figures 1 et 4, le dispositif comporte avantageusement un cliquet 25 positionné entre la face avant de la platine de fixation 1 et la pièce 19 formant glissière, pivotant autour d'un axe de rotation 26 solidaire de la face avant de ladite platine et muni à une première extrémité d'un crochet 27 apte à coopérer avec l'encoche 16 du cintre support 3 et à une autre extrémité d'un bras curviligne 28 à déformation élastique s'étendant sensiblement perpendiculairement au crochet 27 à une hauteur légèrement supérieure à celle du crochet 27 et apte à prendre appui sur le bord inférieur du cintre support 3, opposé au bord de la fente 15 comportant l'encoche 16, lorsque le crochet 27 est retiré de l'encoche 16 afin de permettre le retrait du cintre support 3 de la glissière 21. L'extrémité libre du crochet 27, c'est-à-dire son extrémité supérieure, comporte un chemin de came 29 sur lequel est apte à prendre appui le bord inférieur du cintre support 3 lors du coulissement du cintre 3 dans la glissière 21 afin de procurer la rotation du crochet 27 autour de son axe 26 jusqu'à ce que le crochet 27 s'étende au droit de l'encoche 16 de la fente 15. Ledit chemin de came 29 consiste dans un pan biseauté. Par ailleurs, le cliquet 25 comporte un moyen de rappel 30, de préférence un ressort hélicoïdal, dont les extrémités sont respectivement solidaires de la platine de fixation 1 et de la base du bras curviligne 28 afin de ramener le crochet 27 dans l'encoche 16 de la fente 15.

Il va de soi que le moyen de rappel 30 pourra consister dans tout moyen de rappel bien connu de l'Homme du Métier.

Enfin, le cliquet 25 comporte un cordon de commande 31 solidaire de la base du bras curviligne 28 afin de permettre le retrait du crochet 27 de l'encoche 16 de la fente 15 lorsqu'une traction sur le cordon 31 est exercée, l'autre extrémité du cordon 31 étant avantageusement solidaire d'un dévidoir 32.

On expliquera maintenant le fonctionnement du dispositif de fixation conforme à l'invention à partir des figures 1, 5 et 6A à 6D.

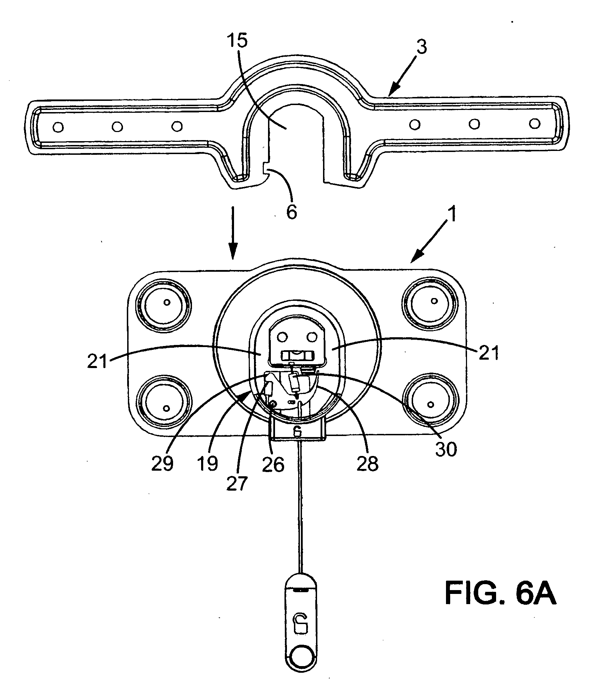

En référence à la figure 6A, la platine de fixation 1 est préalablement fixée au mur de telle manière qu'elle soit parfaitement horizontale et le cintre support 3 de taille appropriée est solidarisé avec les entretoises 18 (figure 1) sur la face arrière de l'écran, non représentée. L'utilisateur manipule alors l'écran parallèlement au mur jusqu'à ce que la fente 15 soit au droit de la pièce 19 formant les glissières 21 (figure 5).

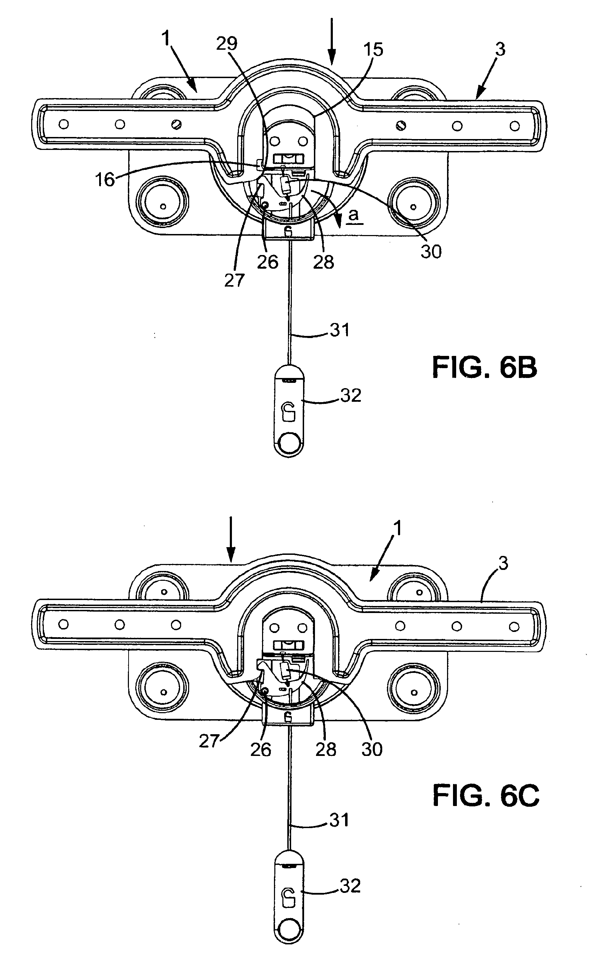

L'utilisateur descend alors l'écran de telle sorte que les bords de la fente 15 coulissent dans les glissières 21 jusqu'à ce que l'extrémité inférieure du bord de la fente 15 portant l'encoche 16 prenne appui sur le chemin de came 29 du crochet 27, en référence à la figure 6B. La descente du cintre support 3 dans les glissières 21 entraîne alors la rotation du crochet 27 en rotation autour de son axe 26 dans le sens des aiguilles d'une montre, suivant la flèche a, jusqu'à ce que le crochet s'étende au droit de l'encoche 16. Le moyen de rappel 30, en référence à la figure 6C, entraîne alors en rotation le crochet 27 dans le sens inverse des aiguilles d'une montre jusqu'à ce que ledit crochet 27 s'étende dans ladite encoche 16. De cette manière, le cintre support 3, et par conséquent l'écran, ne peut plus être retiré en exerçant une poussée verticale. On notera que la stabilité verticale de l'écran est procurée par les bords rectilignes verticaux de la pièce 19 formant glissière qui sont au contact des bords rectilignes de la fente 15.

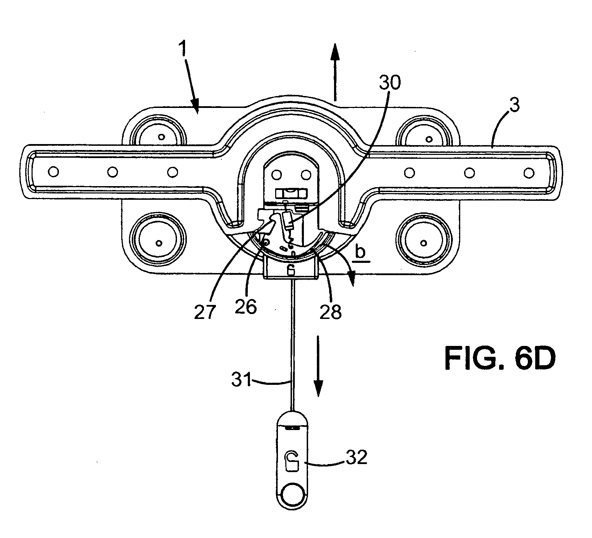

En référence à la figure 6D, le retrait de l'écran est assuré en exerçant une traction vers le bas du cordon de commande 31. Cette traction entraîne simultanément en rotation le crochet 27 et le bras curviligne 28 dans le sens des aiguilles d'une montre, comme l'indique la flèche b. Le crochet 27 échappe alors l'encoche 16 de la fente 15 et le bras curviligne fléchit jusqu'à ce que son extrémité libre s'étende sous le bord inférieur du cintre support. Dans cette position, l'extrémité libre inférieure du cintre support 3 forme une butée d'arrêt empêchant le retour du crochet 27 dans sa position initiale. L'utilisateur peut alors lâcher le cordon de commande 31 puis retirer l'écran en exerçant une poussée verticale.

Enfin, il est bien évident que les exemples que l'on vient de donner ne sont que des illustrations particulières en aucun cas limitatives quant au domaine d'application de l'invention. L'invention étant définie par les revendications ci-jointes

## Revendications

1. Dispositif de fixation pour écran plat du type plasma, LCD ou similaire sur un support, constitué d'une platine dite de fixation (1) et d'un cintre support (3), ladite platine de fixation (1) étant apte à être solidarisée sur un support et comportant sur sa face avant des moyens de solidarisation (19) du cintre support (3) qui est destiné à être fixé sur la face arrière d'un écran plat, ledit cintre support (3) comportant des moyens de solidarisation complémentaires (15) coopérant avec les moyens de solidarisation (19) de la platine de fixation D, et des moyens aptes à assurer successivement le blocage du cintre support (3) sur la platine de fixation (1) et la libération dudit cintre support (3) par rapport à la platine de fixation (1) et inversement, **caractérisé en ce qu'**il comporte un cliquet (25) positionné entre la face avant de la platine de fixation (1) et les moyens de solidarisation (19) de la platine de fixation (1), pivotant autour d'un axe de rotation (26) solidaire de la face avant de ladite platine de fixation (1) et muni à une première extrémité d'un crochet (27) apte à coopérer avec une encoche (16) du cintre support (3) et à une autre extrémité d'un bras curviligne (28) à déformation élastique s'étendant perpendiculairement au crochet (27) et apte à prendre appui sur un bord inférieur du cintre support (3) lorsque le crochet (27) est retiré de l'encoche (16), une extrémité libre inférieure du cintre support (3) formant une butée d'arrêt qui empêche le retour du crochet (27) dans sa position initiale dans l'encoche (16) afin de permettre le retrait du cintre support (3) des moyens de solidarisation (19) de la platine de fixation (1).

2. Dispositif de fixation suivant la revendication 1, **caractérisé en ce que** l'extrémité libre du crochet (27) comporte un chemin de came (29) sur lequel est apte à prendre appui le bord inférieur du cintre support (3) lors du coulissement du cintre (3) dans les moyens de solidarisation (19) de la platine de fixation (1) afin de procurer la rotation du crochet (27) autour de son axe (26) jusqu'à ce que le crochet (27) s'étende au droit de l'encoche (16).

3. Dispositif de fixation suivant l'une quelconque des revendications 1 ou 2, **caractérisé en ce qu'**il comporte un moyen de rappel (30) dont les extrémités sont respectivement solidaires de la platine de fixation (1) et de la base du bras curviligne (28) afin de ramener le crochet (27) dans l'encoche (16).

4. Dispositif de fixation suivant l'une quelconque des revendications 1 à 3, **caractérisé en ce qu'**il comporte un cordon de commande (31) solidaire de la base du bas curviligne (28) afin de permettre le retrait du crochet (27) de l'encoche (16) lorsqu'une traction sur le cordon (31) est exercée.

5. Dispositif de fixation suivant la revendication 4, **caractérisé en ce que** l'autre extrémité du cordon (31) est solidaire d'un dévidoir (32).

6. Dispositif de fixation suivant l'une quelconque des revendications 1 à 5, **caractérisé en ce que** le cintre support (3) est constitué de deux branches (13a,13b) s'étendant de part et d'autre d'une base hémi-annulaire (14) comportant dans sa partie inférieure au moins une fente (15) s'étendant sensiblement perpendiculairement auxdites branches (13a,13b), lesdites branches (13a,13b) étant diamétralement opposées.

7. Dispositif de fixation suivant la revendication 6, **caractérisé en ce qu'**au moins l'un des bords de la fente (15) du cintre support comporte une encoche (16), ladite encoche (16) étant positionnée à proximité de l'extrémité libre de la fente (15).

8. Dispositif de fixation suivant l'une quelconque des revendications 6 ou 7, **caractérisé en ce que** chaque branche (13a,13b) du cintre (3) comporte des trous (17) répartis le long de chaque branche (13a,13b) à intervalles réguliers pour le passage de vis fixation de l'écran.

9. Dispositif de fixation suivant l'une quelconque des revendications 1 à 8, **caractérisé en ce qu'**il comporte au moins une pièce (19), solidaire de la face avant de la platine de fixation (1), formant une glissière pour les bords de la fente (15) du cintre support (3).

10. Dispositif de fixation suivant la revendication 9, **caractérisé en ce que** ladite pièce (19) consiste en une pièce métallique sensiblement ovoïde, comportant deux bords rectilignes opposés et deux bords circulaires opposés, embossé pour former une collerette périphérique (20) qui définit avec la face avant une glissière dans laquelle les bords de la fente (15) du cintre support (3) sont aptes à coulisser.

11. Dispositif de fixation suivant l'une quelconque des revendications précédentes, **caractérisé en ce que** la platine de fixation (1) comporte d'une part au moins deux jours circulaires (6) aptes à recevoir respectivement une rondelle circulaire (8) montée libre en rotation dans lesdits jours (6), chaque rondelle (8) comportant au moins une fente radiale (10) pour le passage des vis de fixation et chaque jour circulaire (6) étant embossé suivant un diamètre légèrement supérieur au diamètre du jour (6) afin de former en creux un épaulement circulaire (7) pour recevoir les rondelles excentriques (8) présentant un diamètre tout juste inférieur au diamètre de l'épaulement circulaire (7), chaque rondelle excentrique (8) étant embossée en creux dans sa partie centrale pour former à sa périphérie une collerette circulaire (9) apte à prendre appui sur l'épaulement circulaire (7) des jours (6), et d'autre part des capots obturateurs (11) circulaires aptes à coiffer les jours (6) et les rondelles excentriques (8) obtenus dans une matière plastique et maintenus en place par déformation élastique en prenant appui sur l'épaulement circulaire (7) et sur le bord périphérique de la collerette circulaire (9) de la rondelle excentrique (8).

12. Dispositif de fixation suivant la revendication 11, **caractérisé en ce que** la platine de fixation (1) comporte un niveau à bulle (12) permettant de s'assurer de la bonne horizontalité de la platine de fixation (1) lors de sa fixation sur le support.

13. Dispositif de fixation suivant l'une quelconque des revendications 11 ou 12, **caractérisé en ce que** la platine de fixation (1) consiste en une plaque métallique rectangulaire comportant quatre jours circulaires (6) pratiqués aux quatre angles de ladite platine de fixation (1).

14. Dispositif de fixation suivant la revendication 13, **caractérisé en ce que** les angles de la platine de fixation (1) sont arrondis afin d'éviter toute blessure lors de sa manipulation.

15. Dispositif de fixation suivant l'une quelconque des revendications 11 à 14, **caractérisé en ce que** chaque rondelle excentrique (8) comporte une fente radiale (10) s'étendant sensiblement depuis le centre jusqu'à la collerette (9).

## Patentansprüche

1. Befestigungsvorrichtung für Flachbildschirm des Typs Plasma, LCD oder dergleichen an einem Halter, die aus einer sogenannten Befestigungsplatine (1) und aus einem Haltebogen (3) gebildet ist, wobei die Befestigungsplatine (1) mit einem Halter fest verbunden werden kann und an ihrer vorderen Fläche Mittel (19) für die Befestigung des Haltebogens (3) aufweist, der dazu bestimmt ist, an der hinteren Fläche des Flachbildschirms befestigt zu werden, wobei der Haltebogen (3) komplementäre Befestigungsmittel (15) aufweist, die mit den Mitteln (19) für die Befestigung der Befestigungsplatine (1) zusammenwirken, und Mittel aufweist, die nacheinander die Blockierung des Haltebogens (3) an der Befestigungsplatine (1) und die Freigabe des Haltebogens (3) von der Befestigungsplatine (1) und umgekehrt gewährleisten, **dadurch gekennzeichnet, dass** sie eine Klinke (25) aufweist, die zwischen der vorderen Fläche der Befestigungsplatine (1) und den Mitteln (19) für die Befestigung der Befestigungsplatine (1) positioniert ist und um eine Drehachse (26) schwenkt, die mit der vorderen Fläche der Befestigungsplatine (1) fest verbunden ist, und an einem ersten Ende mit einem Haken (27) versehen ist, der mit einer Kerbe (16) des Haltebogens (3) zusammenwirken kann, und an einem weiteren Ende mit einem gebogenen Arm (28) mit elastischer Verformung versehen ist, der sich senkrecht zu dem Haken (27) erstreckt und sich an einem unteren Rand des Haltebogens (3) abstützen kann, wenn der Haken (27) aus der Kerbe (16) zurückgezogen ist, wobei ein unteres freies Ende des Haltebogens (3) einen Halteanschlag bildet, der die Rückkehr des Hakens (27) in seine Anfangsposition in der Kerbe (16) verhindert, um das Zurückziehen der Mittel (19) für die Befestigung der Befestigungsplatine (1) aus dem Halteträger (3) zu ermöglichen.

2. Befestigungsvorrichtung nach Anspruch 1, **dadurch gekennzeichnet, dass** das freie Ende des Hakens (27) eine Nockenkurve (29) aufweiset, auf der sich der untere Rand des Haltebogens (3) abstützen kann, wenn der Bogen (3) in den Mitteln (19) für die Befestigung der Befestigungsplatine (1) gleitet, um die Drehung des Hakens (27) um seine Achse (26) zu schaffen, bis sich der Haken (27) an den Ort der Kerbe (16) erstreckt.

3. Befestigungsvorrichtung nach einem der Ansprüche 1 oder 2, **dadurch gekennzeichnet, dass** sie ein Rückstellmittel (30) umfasst, dessen Enden mit der Befestigungsplatine (1) bzw. mit der Basis des gekrümmten Arms (28) fest verbunden sind, um den Haken (27) in die Kerbe (16) zurückzuführen.

4. Befestigungsvorrichtung nach einem der Ansprüche 1 bis 3, **dadurch gekennzeichnet, dass** sie eine Steuerschnur (31) aufweist, die mit der Basis des gekrümmten Arms (28) fest verbunden ist, um das Zurückziehen des Hakens (27) aus der Kerbe (6) zu ermöglichen, wenn an der Schnur (31) gezogen wird.

5. Befestigungsvorrichtung nach Anspruch 4, **dadurch gekennzeichnet, dass** das andere Ende der Schnur (31) mit einer Winde (32) fest verbunden ist.

6. Befestigungsvorrichtung nach einem der Ansprüche 1 bis 5, **dadurch gekennzeichnet, dass** der Haltebogen (3) aus zwei Schenkeln (13a, 13b) gebildet ist, die sich beiderseits einer halbringförmigen Basis (14) erstrecken, die in ihrem unteren Teil wenigstens einen Schlitz (15) aufweist, der sich im Wesentlichen senkrecht zu den Schenken (13a, 13b) erstreckt, wobei die Schenkel (13a, 13b) diametral entgegengesetzt sind.

7. Befestigungsvorrichtung nach Anspruch 6, **dadurch gekennzeichnet, dass** wenigstens einer der Ränder des Schlitzes (15) des Haltebogens eine Kerbe (16) aufweist, wobei die Kerbe (16) in der Nähe des freien Endes des Schlitzes (15) positioniert ist.

8. Befestigungsvorrichtung nach einem der Ansprüche 6 oder 7, **dadurch gekennzeichnet, dass** jeder Schenkel (13a, 13b) des Bogens (3) Löcher (17) aufweist, die längs jedes Schenkels (13a, 13b) in regelmäßigen Intervallen für den Durchgang von Befestigungsschrauben des Bildschirms verteilt sind.

9. Befestigungsvorrichtung nach einem der Ansprüche 1 bis 8, **dadurch gekennzeichnet, dass** sie wenigstens ein Teil (19) aufweist, das mit der vor deren Fläche der Befestigungsplatine (1) fest verbunden ist und eine Gleitbahn für die Ränder des Schlitzes (15) des Haltebogens (3) bildet.

10. Befestigungsvorrichtung nach Anspruch 9, dadurch gekennzeichet, dass das Teil (19) aus einem im Wesentlichen eiförmigen metallischen Teil besteht, das zwei gegenüberliegende geradlinige Ränder und zwei gegenüberliegende kreisförmige Ränder aufweiset und geprägt ist, um einen Umfangskranz (20) zu bilden, der mit der vorderen Fläche eine Gleitbahn definiert, in der die Ränder des Schlitzes (15) des Haltebogens (3) gleiten können.

11. Befestigungsvorrichtung nach einem der vorhergehenden Ansprüche, **dadurch gekennzeichnet, dass** die Befestigungsplatine (1) einerseits wenigstens zwei kreisförmige Öffnungen (6) aufweist, die jeweils eine kreisförmige Scheibe (8) aufnehmen können, die in den Öffnungen (6) frei drehbar montiert ist, wobei jede Scheibe (8) wenigstens einen radialen Schlitz (10) für den Durchgang von Befestigungsschrauben aufweiset und wobei jede kreisförmige Öffnung (6) mit einem Durchmesser geprägt ist, der etwas größer ist als der Durchmesser der Scheibe (6), um eine vertiefte kreisförmige Schulter (7) für die Aufnahme exzentrischer Scheiben (8) zu bilden, die einen Durchmesser aufweisen, der gerade etwas kleiner als der Durchmesser der kreisförmige Schulter (7) ist, wobei jede exzentrische Scheibe (8) in ihrem mittleren Teil vertieft geprägt ist, um an ihrem Umfang einen kreisförmigen Kranz (9) zu bilden, der sich an der kreisförmigen Schulter (7) der Öffnungen (6) abstützen kann, und andererseits kreisförmige Verschlusshauben (11) aufweist, die die Öffnungen (6) und die exzentrischen Scheiben (8) überdecken können und aus einem Kunststoff gebildet sind und durch elastische Verformung mit Abstützung an der kreisförmigen Schulter (7) und an dem Umfangsrand des kreisförmigen Kranzes (9) der exzentrischen Scheibe (8) an ihrem Ort gehalten werden.

12. Befestigungsvorrichtung nach Anspruch 11, **dadurch gekennzeichnet, dass** die Befestigungsplatine (1) eine Röhrenlibelle (12) aufweist, die die Sicherstellung der richtigen Horizontalität der Befestigungsplatine (1) bei ihrer Befestigung am Halter ermöglicht.

13. Befestigungsvorrichtung nach einem der Ansprüche 11 oder 12, dadurch gekennzeichet, dass die Befestigungsplatine (1) aus einer rechtwinkligen Metallplatte besteht, die vier kreisförmigen Öffnungen (6) aufweist, die an den vier Ecken der Befestigungsplatine (1) ausgebildet sind.

14. Befestigungsvorrichtung nach Anspruch 13, **dadurch gekennzeichnet, dass** die Ecken der Befestigungsplatine (1) abgerundet sind, um bei ihrer Handhabung jegliche Verletzung zu vermeiden.

15. Befestigungsvorrichtung nach einem der Ansprüche 11 bis 14, **dadurch gekennzeichnet, dass** jede exzentrische Scheibe (8) einen radialen Schlitz (10) aufweiset, der sich im Wesentlichen von der Mitte bis zu dem Kranz (9) erstreckt.

## Claims

1. A device for mounting a flat panel display of plasma, LCD or the like type on a support, formed of a so-called mounting plate (1) and of a support hanger (3), said mounting plate (1) being capable of being rigidly attached to a support and comprising on its front surface means for attaching the support hanger (3), which is intended to be fastened to the back side of a flat panel display, said support hanger (3) comprising complimentary attachment means (15) cooperating with the attachment means (19) of the mounting plate (1) and means capable of successively enabling to block the support hanger (3) on the mounting plate (1) and to release said support hanger (3) from said mounting plate (1) and conversely, **characterized in that** it comprises a ratchet (25) positioned between the front surface of the mounting plate (1) and the attachment means (19) of the mounting plate (1), pivoting around a rotation axis (26) rigidly attached to the front surface of said mounting plate (1) and provided at a first end with a hook (27) capable of cooperating with a notch (16) of the support hanger (3) and at another end with a resiliently-deformable curved arm (28) extending perpendicularly to the hook (27) and capable of bearing on a lower edge of the support hanger (3) when the hook (27) is removed from the notch (16), a free lower end of the support hanger (3) forming a stop which prevents the hook (27) from returning to its initial position in the notch (16), in order to enable to remove the support hanger (3) from the attachment means (19} of the mounting plate (1),

2. The mounting device of claim 1, **characterized in that** the free end of the hook (27) comprises a cam race (29) on which the lower edge of the support hanger (3) is capable of bearing during the sliding of the hanger (3) in the attachment means (19) of the mounting plate (1) to have the hook (27) rotate around its axis (26) until the hook (27) extends in line with the notch (16).

3. The mounting device of any of claims 1 or 2, **characterized in that** it comprises return means (30) having ends respectively solid with the mounting plate (1) and with the base of the curved arm (28) to take the hook (27) back into the notch (16).

4. The mounting device of any of claims 1 to 3, **characterized in that** it comprises a control string (31) attached to the base of the curved arm (28) to enable to remove the hook (27) from the notch (16) when the string (31) is pulled.

5. The mounting device of claim 4, **characterized in that** the other end of the string (31) is attached to a reel (32).

6. The mounting device of any of claims 1 to 5, **characterized in that** the support hanger (3) is formed of two branches (13a, 13b) extending on either side of a hemi-annular base (14) comprising in its lower portion at least one slot (15) extending substantially perpendicularly to said branches (13a, 13b), said branches (13a, 13b) being diametrically opposite.

7. The mounting device of claim 6, **characterized in that** at least one of the edges of the slot (15) of the support hanger comprises a notch (16), said notch (16) being positioned dose to the free end of the slot (15).

8. The mounting device of any of claims 6 or 7, **characterized in that** each branch (13a, 13b) of the hanger (3) comprises holes (17) distributed along each branch (13a, 13b) at regular intervals for the passing of screws for mounting the display panel.

9. The mounting device of any of claims 1 to 8, **characterized in that** it comprises at least one part (19), rigidly attached to the front surface of the mounting plate (1), forming a guide rail for the edges of the slot (15) of the support hanger (3).

10. The mounting device of claim 9, **characterized in that** said clement (19) is a substantially ovoid metal part, comprising two opposite rectilinear edges and two opposite circular edges, embossed to form a peripheral flange (20) which defines with the front surface a guide rail into which the edges of the slot (15) of the support hanger (3) are capable of sliding.

11. The mounting device of any of the foregoing claims, **characterized in that** the mounting plate (1) comprises on the one hand at least two circular openings (6) capable of respectively receiving a circular washer (8) assembled to freely rotate in said openings (6), each washer (8) comprising at least one radial slot for the passing of the mounting screws and each circuit opening (6) being embossed according to a diameter slightly greater than the diameter of the opening (6) to form a depressed circular shoulder (7) for receiving the eccentric washers (8) having a diameter just below the diameter of the circular shoulder (7), each eccentric washer (8) being embossed to be hollow in its central portion in order to form at its periphery a circular flange (9) capable of bearing on the circular shoulder (7) of the openings (6) and, on the other hand, circular closing covers capable of covering the openings (6) and the eccentric washers (8) obtained in a plastic material and held in place by resilient deformation, by bearing on the circular shoulder (7) and on the peripheral edge of the circular flange (9) of the eccentric washer (8).

12. The mounting device of claim 11, **characterized in that** the mounting plate (1) comprises a spirit level (12) enabling to make sure that the mounting plate (1) is really horizontal on mounting thereof on the support.

13. The mounting device of any of claims 11 or 12, **characterized in that** the mounting plate (1) is a rectangular metal plate comprising four circular openings (6) made at the four angles of said mounting plate {1).

14. The mounting device of claim 13, **characterized in that** the angles of the mounting plate (1) are rounded to avoid any injury on handling thereof.

15. The mounting device of any of claims 11 to 14, **characterized in that** each eccentric washer (8) comprises a radial slot (10) extending substantially from the center to the flange (9).
